# EUROPÄISCHE PATENTSCHRIFT

(11) **EP 2 080 840 B1**
(45) Veröffentlichungstag und Bekanntmachung des Hinweises auf die Patenterteilung: **02.05.2012**
(21) Anmeldenummer: 08020441.5
(22) Anmeldetag: 25.11.2008
(51) Int. Cl.: E03F 1/00, C02F 3/10

(54) **Entwässerungsvorrichtung**
Drainage device
Dispositif de drainage

(30) Priorität: 19.01.2008 DE 202008000787 U
(43) Veröffentlichungstag der Anmeldung: 22.07.2009
(73) Patentinhaber: HAURATON GmbH & Co. KG, 76437 Rastatt (DE)
(72) Erfinder: Naujoks, Volker, 76476 Bischweier (DE)
(74) Vertreter: Geitz Truckenmüller Lucht

(56) Entgegenhaltungen:
- WO-A-2006/042293
- DE-A1- 19 647 361
- DE-C1- 10 143 985
- DE-U1- 8 525 788

## Beschreibung

Die vorliegende Erfindung betrifft eine Entwässerungsvorrichtung mit einer Rinneneinheit zur Aufnahme von Oberflächenwasser und einem Filterelement zur Reinigung des Oberflächenwassers, wobei das Filterelement ein Filterrohr umfasst, welches zumindest abschnittsweise in der Rinneneinheit aufgenommen ist.

Eine solche Entwässerungsvorrichtung ist bereits aus der WO2006/042293 bekannt. Das Oberflächenwasser wird in einem Rinnenkörper gesammelt. In der Rinne verläuft ein Filterrohr, in welchem das durch die Filterwirkung des Rohres gereinigte Wasser nach unten aus der Rinne herausgeführt wird.

Eine andere Entwässerungsvorrichtung ist aus der DE 101 43 985 C1 vorbekannt. Diese Schrift sieht vor, eine Rinneneinheit zu schaffen, welches in einzelne Kammern unterteilt ist, wobei diese mit einem Substrat zur Reinigung des Oberflächenwassers angefüllt sind.

Das Substrat dient dazu, sowohl die Feuchtigkeit im Boden zu erhalten, als auch das von oben her in die Rinneneinheit einsinkendes Oberflächenwasser zu reinigen. Der Aufbau dieser Rinne sieht hierzu vor, dass die einzelnen Rinneneinheiten mithilfe von Stauwänden in Abteilungen unterteilt sind, so dass sich das Oberflächenwasser in der Rinne stauen und abschnittsweise bodenseitig in den die Rinne umgebenden Boden einsickern kann.

Aus der DE 196 47 361 A1 ist ferner eine mehrschichtige Bodenplatte mit einem Unterbau, umfassend eine Sperrschicht und ein Drainagesystem, zur Aufnahme und Versickerung von Flüssigkeiten bekannt. Das Drainagesystem schließt auch ein Drainagerohr zur Einleitung von Flüssigkeiten ein.

Aus der DE 85 25 788 U1 ist zudem ein Formstück aus Beton zur Entwässerung von Bauwerken bekannt, wobei in das Formstück ein Strömungskanal innerhalb eines Rohres eingearbeitet ist.

Um ein Einsickern in den umgebenden Boden zu ermöglichen, ist es erforderlich, das Fundament der Rinne für Wasser durchlässig zu gestalten. Hierbei besteht das Problem, ein Fundament zu schaffen, welches die erforderliche Durchlässigkeit für das Wasser aufweist und gleichzeitig eine Befahrung der Rinne mit größeren Lasten ermöglicht. Ein solches Fundament wird jedoch in der angegebenen Schrift nicht vorgeschlagen, so dass das Problem der Schwerlastbefahrung für eine Versickerungsrinne der genannten Art weiterhin nicht besteht.

Vor diesem Hintergrund liegt der vorliegenden Erfindung die Aufgabe zu Grunde, ein Rinnenelement zur Reinigung und Versickerung von Oberflächenwasser zu schaffen, welche ebenfalls zur Befahrung durch Schwerlastverkehr ertüchtigt ist.

Dies gelingt mithilfe einer Entwässerungsvorrichtung gemäß den Merkmalen des Hauptanspruchs. Weitere sinnvolle Ausgestaltungen können den Unteransprüchen entnommen werden.

Erfindungsgemäß ist eine an sich herkömmliche Rinneneinheit zur Bildung einer Rinne vorgesehen, in welcher ein Filterelement aufgenommen ist. Dieses Filterelement umfasst ein Filterrohr, welches die Rinneneinheit zumindest abschnittsweise durchläuft, insbesondere entlang der Längserstreckung der Rinneneinheit angeordnet ist. In einer solchen Entwässerungsvorrichtung wird das Wasser nach seinem Eintritt in die Rinneneinheit von dem Bereich innerhalb der Rinne in einen Bereich innerhalb des Filterrohrs durchtreten.und sodann durch das Filterrohr hindurch abgeleitet werden. Auf eine bodenseitige Versickerung direkt an Ort und Stelle kann aufgrund dieser Ableitung verzichtet werden, so dass ein herkömmliches Fundament, etwa ein Betonfundament, welches zur Schwerlastbefahrung in üblicher Weise hergestellt ist, verwendbar ist. Die Ableitung des Oberflächenwassers erfolgt mithilfe des Filterrohrs an eine für den Rohrdurchtritt geeignete Stelle, etwa eine Stirnwand der Entwässerungsrinne oder eine Seitenwand außerhalb des Schwerlastbereichs, wodurch eine Ableitung in einer definierten Position möglich ist.

Im Wesentlichen ist die Rinneneinheit so konstruiert, dass das Oberflächenwasser über einen Oberflächeneinlauf in die Rinneneinheit eingetragen wird, sich in der Rinneneinheit staut, was etwa durch den Einsatz von Stirnwänden und gegebenenfalls auch Zwischenwänden ermöglicht wird, und über das Filterrohr abtransportiert wird. Dem Filterrohr kann ferner ein gebogener Ablauf derart zugeordnet sein, dass eine Stauung des Wassers innerhalb der Rinne hierdurch weiter gefördert wird. Idealerweise wird ein Ablauf über das Filterrohr lediglich dann erfolgen, wenn die Rinneneinheiten im Wesentlichen mit Wasser gefüllt sind.

Das Filterrohr ermöglicht durch eine wasserdurchlässige, vorzugsweise gitterförmige, Wandung den Durchtritt des Wassers vom Bereich der Rinneneinheit in das Innere des Filterrohrs hinein und bewirkt bereits durch diesen Durchtritt durch die gitterförmige Struktur eine grobe Reinigung des in das Filterrohr eintretenden Wassers. Allerdings kann die Filterwirkung des Filterrohrs noch dadurch verbessert werden, dass ein Filtermantel diesem Filterrohr zugeordnet ist, welcher vorzugsweise aus Geotextil besteht. Durch eine gezielte Tränkung des Geotextils mit Mikroorganismen sind weitere gezielte Reinigungsstufen möglich, welche sowohl umweltschonend sind, als auch lediglich abschnittsweise, etwa durch eine abschnittsweise Unterteilung des Filtermantels, einsetzbar sind.

Dem Filterrohr ist mit Vorteil zudem eine Filterplatte zugeordnet, welche derart oberhalb des Filterrohrs angeordnet ist, dass eine Abschirmung des Filterrohrs vor dem von oben her auf das Filterrohr einströmende Wasser erfolgt. Die Filterplatte ihrerseits ermöglicht zunächst einmal eine erste, grobe Reinigung des einfließenden Wassers, ist aber vor allem auch von außen gut zugreifbar und leicht zu reinigen.

Mit besonderem Vorteil ist die Rinneneinheit abgesehen von dem Filterelement mit einem Substrat angefüllt, welches eine biologisch/chemische Reinigung des Oberflächenwassers ermöglicht und gleichzeitig aufgrund einer gewissen Speicherwirkung eine Grundfeuchte im Boden erhält.

Es ist insbesondere von Vorteil, wenn ein solcher Ablauf mit einem Notüberlauf derart versehen ist, dass ein Auslösen des Notüberlaufs mittels eines Anzeigemediums anzeigbar ist, so dass gegebenenfalls eine Reinigung des Notüberlaufs nur bei Bedarf erfolgen muss.

Ablaufseitig kann dem Filterrohr entsprechend etwa eine Versickerungsanlage oder auch eine Regennutzungsanlage anverbunden sein, vorzugsweise unter Zwischenschaltung eines Kontrollschachtes.

Die vorstehend beschriebene Erfindung wird im Folgenden anhand eines Ausführungsbeispiels näher erläutert.

Es zeigen
- Figur 1: eine Entwässerungsvorrichtung mit stirnseitigem Ablauf in einer perspek- tivischen Darstellung,
- Figur 2: ein Filterrohr mit einem Filtermantel in einer perspektivischen Darstellung, wobei der Filtermantel und die Wandung des Filterrohrs durchsichtig darge- stellt sind,
- Figur 3: das in Figur 2 mit A bezeichnete Detail des Filterrohrs und des Filtermantels, jedoch nicht in durchsichtiger Darstel- lung,
- Figur 4: eine weitere Entwässerungsvorrichtung mit längsseitigen Abläufen in einer perspektivischen Darstellung und
- Figur 5: einen Querschnitt durch die Entwässe- rungsrinne nach Figur 1.

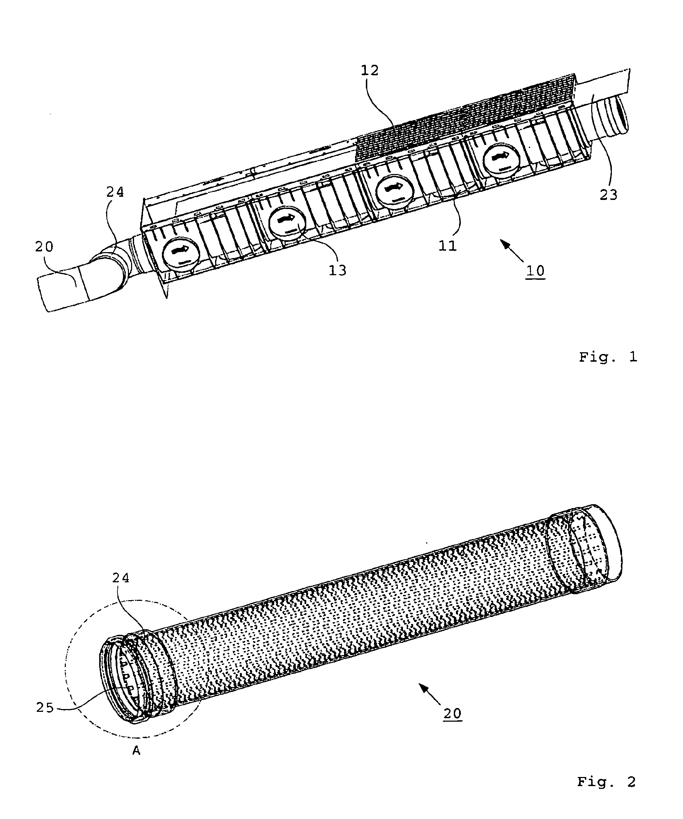

Figur 1 zeigt eine Entwässerungsvorrichtung 10, welche im Wesentlichen aus einer Rinneneinheit 11 und einem Filterrohr 20 hergestellt ist. Die Entwässerungsvorrichtung 10 dient zum Reinigen und Versickern von Oberflächenwasser, wobei dieses durch einen Abdeckrost 12 in die Rinne gelangt und auf eine Filterplatte 23 trifft. Diese Filterplatte 23 nimmt eine erste Filterung vor, indem eine Abschirmung der darunter liegenden Filterschichten erfolgt. Unterhalb der Filterplatte 23 ist das Filterrohr 20 in einem hier nicht dargestellten Substrat eingebettet, welches eine biologisch/chemische Reinigung des einlaufenden Oberflächenwassers bewirkt. Nach dieser zweiten Reinigungsstufe wird das Wasser in das Filterrohr 20 eintreten und über dieses zu einem Versickerungspunkt geleitet werden. Ein solcher Versickerungspunkt befindet sich bewusst nicht unmittelbar unterhalb der Rinneneinheit 11, um eine für die Schwerlastbefahrung erforderliche Fundamentierung der Rinne zu ermöglichen. Vielmehr durchgreift das Filterrohr 20 die Wandung der Rinneneinheit entweder stirnseitig oder Längsseitig, wobei auf der Längsseite Abgänge 13 zur Verlegung des Filterrohrs 20 oder weiterer Abläufe 21 vorgesehen sind. Außerhalb der Rinneneinheit ist das Filterrohr 20 nicht mehr durchlässig ausgestaltet, sondern als herkömmlicher Ablauf.

Figur 2 zeigt ein isoliert dargestelltes Filterrohr 20, welches von einem Filtermantel 22 umgeben ist. Dieser ist in der Figur 2 durchsichtig dargestellt, so dass die gitterförmige Wandung des Filterrohrs 20 sichtbar ist. Bereits allein durch die Wandung kann eine grobe Filterung erfolgen, durch Hinzufügen des Filtermantels 22, welcher aus Geotextil hergestellt ist, kann eine weitere Filterstufe erreicht werden. Dabei kann die Filterwirkung sogar noch weiter verbessert werden, indem das Geotextil gezielt mit Mikroorganismen getränkt wird. Auch eine abschnittsweise Anordnung oder Ausgestaltung des Filtermantels 22 ist möglich.

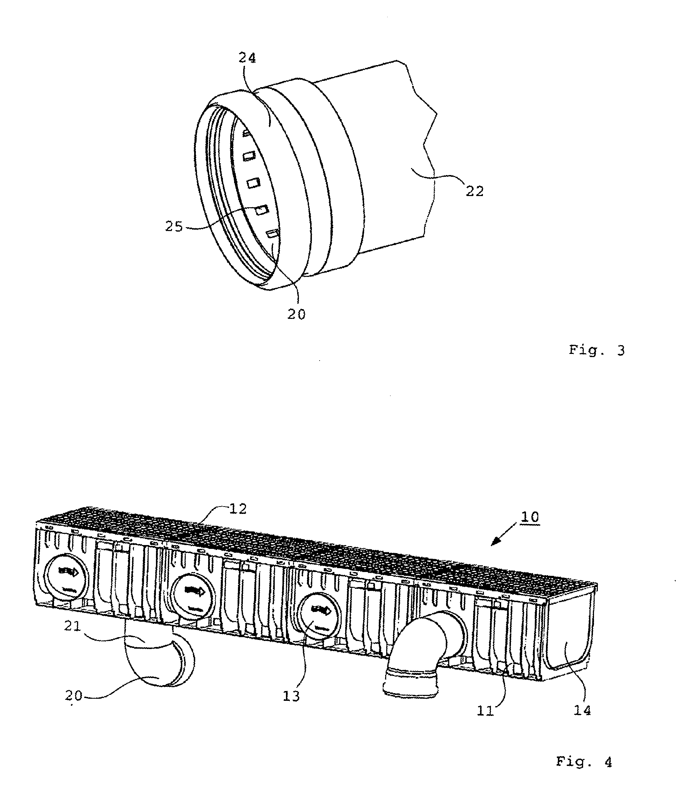

Figur 3 zeigt das Detail A der Figur 2, welche eine Steckmuffe 24 zur Verbindung mehrerer Filterrohrabschnitte aufweist. Das Filterrohr ist hierdurch verlängerbar und ohne Weiteres mit herkömmlichen Rohren verbindbar, wie sie etwa für Abläufe verwendet werden.

Figur 4 zeigt eine weitere Entwässerungsvorrichtung, welche eine seitliche Entwässerung der Rinneneinheit 11 vorsieht. Das in die Rinneneinheit einfließende Wasser wird mithilfe von Trennwänden und Stirnwänden 14 in der Rinneneinheit 11 gestaut, so dass das Substrat stets eine geeignete Grundfeuchte aufweist. Die Stauhöhe kann etwa auch über die Anordnung der Abläufe gesteuert werden, deren Verlauf die Stauhöhe definiert.

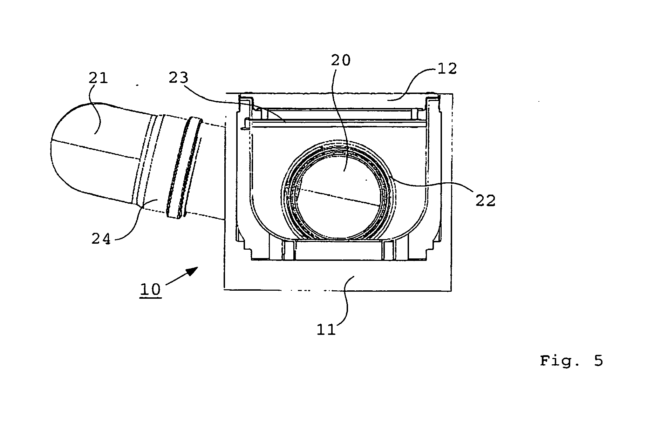

Figur 5 zeigt einen Querschnitt durch die Entwässerungsvorrichtung 10 gemäß Figur 1, wobei hierin die Schrägstellung des Filterrohrs 20 in Bezug auf die Rinneneinheit 11 sichtbar ist. Aufgrund dieser Schrägstellung des außerhalb der Rinneneinheit 11 liegenden Ablaufs 21 wird das Wasser sich in der Rinneneinheit 11 über die Unterkante des Ablaufs, also etwa zur halben Höhe des Filterrohrs 20, stauen. Eine Reinigung des Wassers erfolgt sowohl über das Filterrohr 20 und den Filtermantel 22, als auch über die oberhalb des Filterrohrs 20 angeordnete Filterplatte 23 und das das Filterrohr umgebende, hier nicht näher dargestellte Substrat.

Vorstehend ist somit eine Entwässerungsvorrichtung beschrieben, welche dadurch schwerlastbefahrbar ist, dass ein entsprechendes Fundament unterhalb der Rinne angeordnet wird. Die Versickerung wird zu diesem Zweck mittels eines Filterrohrs an eine hierfür geeignete Stelle verlagert.

### BEZUGSZEICHENLISTE

- 10: Entwässerungsvorrichtung
- 11: Rinneneinheit
- 12: Abdeckrost
- 13: Abgang
- 14: Stirnwand
- 20: Filterrohr
- 21: Ablauf
- 22: Filtermantel
- 23: Filterplatte
- 24: Steckmuffe
- 25: Gitteröffnungen

## Patentansprüche

1. Entwässerungsvorrichtung mit einer Rinneneinheit (11) zur Aufnahme von Oberflächenwasser und einem Filterelement zur Reinigung des Oberflächenwassers, wobei das Filterelement ein Filterrohr (20) umfasst, welches zumindest abschnittsweise in der Rinneneinheit (11) aufgenommen ist,
**dadurch gekennzeichnet, dass** das Filterrohr (20) aus der Rinneneinheit (11) über eine Stirnwand (14) oder eine Seitenwand herausgeführt ist und die Rinneneinheit (11) neben dem Filterelement mit einem Substrat zumindest teilweise angefüllt ist.

2. Entwässerungsvorrichtung gemäß Anspruch 1, **dadurch gekennzeichnet, dass** das Filterrohr (20) eine zumindest abschnittsweise wasserdurchlässige, vorzugsweise gitterförmige, Wandung aufweist.

3. Entwässerungsvorrichtung gemäß einem der Ansprüche 1 oder 2, **dadurch gekennzeichnet, dass** das Filterrohr (20) zumindest abschnittsweise von einem Filtermantel (22), vorzugsweise aus Geotextil, umhüllt ist.

4. Entwässerungsvorrichtung gemäß Anspruch 3, **dadurch gekennzeichnet, dass** der Filtermantel (22) mit Mikroorganismen getränkt ist.

5. Entwässerungsvorrichtung gemäß einem der vorhergehenden Ansprüche, **dadurch gekennzeichnet, dass** das Filterelement eine Filterplatte (23) umfasst, welche dem Filterrohr (20) derart zugeordnet ist, dass das Filterrohr (20) durch die Filterplatte (23) zumindest abschnittsweise vor in die Rinneneinheit (11) einfließendem Oberflächenwasser abgeschirmt ist.

6. Entwässerungsvorrichtung gemäß einem der vorhergehenden Ansprüche, **dadurch gekennzeichnet, dass** das Oberflächenwasser über einen Oberflächeneinlauf in die Rinneneinheit (11) gelangt.

7. Entwässerungsvorrichtung nach einem der vorhergehenden Ansprüche, **dadurch gekennzeichnet, dass** das Filterrohr (20) ablaufseitig, insbesondere über einen Kontrollschacht, mit einer Versickerungsanlage oder einer Regennutzungsanlage verbunden ist.

8. Entwässerungsvorrichtung nach Anspruch7, **dadurch gekennzeichnet, dass** dem Filterrohr (20) ein gebogener Ablauf (21) derart zugeordnet ist, dass ein Wasserablauf durch das Filterrohr (20) nur bei einer weitgehend gefüllten Rinneneinheit (11) erfolgt.

9. Entwässerungsvorrichtung gemäß Anspruch 8, **dadurch gekennzeichnet, dass** der Ablauf mit einem Notüberlauf derart versehen ist, dass ein Auslösen des Notüberlaufs mittels eines Anzeigemediums anzeigbar ist.

10. Entwässerungsvorrichtung gemäß einem der vorhergehenden Ansprüche, **dadurch gekennzeichnet, dass** die Rinneneinheit (11) oder eine aus mehreren Rinneneinheiten gebildete Rinne an sämtlichen Enden eine Stirnwand (14) aufweist.

11. Entwässerungsvorrichtung gemäß Anspruch 10, **dadurch gekennzeichnet, dass** die Rinneneinheit (11) oder die Rinne entlang ihrer Längserstreckung mithilfe von Trennwänden oder unter Zwischenschaltung von Einlaufkästen in Abteilungen eingeteilt ist.

12. Entwässerungsvorrichtung gemäß einem der vorhergehenden Ansprüche, **dadurch gekennzeichnet, dass** das Filterrohr (20) mittels eines Muffenstecksystems zusammensetzbar ist.

13. Entwässerungsvorrichtung gemäß einem der vorhergehenden Ansprüche, **dadurch gekennzeichnet, dass** der Rinneneinheit (11) ein Fundament zur Schwerlastbefahrung zugeordnet ist.

## Claims

1. A drainage device with a channel unit (11) for receiving surface water and a filter element for cleaning the surface water, the filter element comprising a filter pipe (20), which is received at least in some sections in the channel unit (11), **characterized in that** the filter pipe (20) is guided out of the channel unit (11) via an end wall (14) or a side wall and, besides the filter element, the channel unit (11) is filled at least partially with a substrate.

2. The drainage device according to claim 1, **characterized in that** the filter pipe (20) has a wall, preferably in the manner of a grating, that is permeable to water at least in some sections.

3. The drainage device according to either claim 1 or 2, **characterized in that** the filter pipe (20) is enveloped at least in some sections by a filter jacket (22), which is preferably made of a geotextile material.

4. The drainage device according to claim 3, **characterized in that** the filter jacket (22) is saturated with microorganisms.

5. A drainage device according to one of the preceding claims, **characterized in that** the filter element comprises a filter plate (23), which is associated with the filter pipe (20) such that the filter pipe (20) is shielded at least in some sections by the filter plate (23) from surface water flowing into the channel unit (11).

6. A drainage device according to one of the preceding claims, **characterized in that** the surface water reaches the channel unit (11) via a surface inlet.

7. A drainage device according to one of the preceding claims, **characterized in that** the filter pipe (20), on the drain side, is connected to a seepage system or a rainwater usage system, in particular via an inspection chamber.

8. The drainage device according to claim 7, **characterized in that** the filter pipe (20) is associated with a curved drain (21) such that water drains through the filter pipe (20) only if the channel unit (11) is substantially full.

9. The drainage device according to claim 8, **characterized in that** the drain is provided with an emergency overflow unit such that a triggering of the emergency overflow unit can be indicated by means of a display medium.

10. A drainage device according to one of the preceding claims, **characterized in that** the channel unit (11), or a channel composed of several channel units, comprises an end wall (14) at each end.

11. The drainage device according to claim 10, **characterized in that** the channel unit (11), or the channel, is divided into compartments along the longitudinal extension using partitions or interposed drain boxes.

12. A drainage device according to one of the preceding claims, **characterized in that** the filter pipe (20) can be assembled by means of a sleeve connector system.

13. A drainage device according to one of the preceding claims, **characterized in that** the channel unit (11) is associated with a foundation capable of bearing heavy-duty traffic.

## Revendications

1. Dispositif de drainage, avec une unité de gouttière (11) pour la réception d'eau de surface et un élément filtrant pour le nettoyage de l'eau de surface, dans lequel l'élément filtrant comprend un conduit de filtre (20) au moins partiellement admis dans l'unité de gouttière (11),
**caractérisé en ce que** le conduit de filtre (20) est guidé hors de l'unité de gouttière (11) par une paroi frontale (14) ou une paroi latérale, et l'unité de gouttière (11) est au moins partiellement remplie d'un substrat en plus de l'élément filtrant.

2. Dispositif de drainage selon la revendication 1, **caractérisé en ce que** le conduit de filtre (20) comporte une paroi au moins partiellement perméable à l'eau, de préférence en forme de grille.

3. Dispositif de drainage selon l'une des revendications 1 ou 2, **caractérisé en ce que** le conduit de filtre (20) est au moins partiellement enrobé dans une enveloppe de filtre (22), de préférence en géotextile.

4. Dispositif de drainage selon la revendication 3, **caractérisé en ce que** l'enveloppe de filtre (22) est imprégnée de microorganismes.

5. Dispositif de drainage selon l'une des revendications précédentes, **caractérisé en ce que** l'élément filtrant comprend une plaque de filtre (23) attribuée de telle manière au conduit de filtre (20), que le conduit de filtre (20) est au moins partiellement blindé par la plaque de filtre (23) contre l'eau de surface s'écoulant dans l'unité de gouttière (11).

6. Dispositif de drainage selon l'une des revendications précédentes, **caractérisé en ce que** l'eau de surface parvient dans l'unité de gouttière (11) par une admission de surface.

7. Dispositif de drainage selon l'une des revendications précédentes, **caractérisé en ce que** le conduit de filtre (20) est relié, côté évacuation, à un dispositif d'infiltration ou à un dispositif d'exploitation de l'eau de pluie, par le biais d'un puits de contrôle.

8. Dispositif de drainage selon la revendication 7, **caractérisé en ce qu'**une évacuation (21) est reliée de telle manière au conduit de filtre (20), qu'une évacuation d'eau par le conduit de filtre (20) ne s'effectue que lorsque l'unité de gouttière (11) est amplement remplie.

9. Dispositif de drainage selon la revendication 8, **caractérisé en ce que** l'évacuation est pourvue de telle manière d'un trop-plein de secours, qu'un déclenchement du trop-plein de secours peut être indiqué par un moyen d'indication.

10. Dispositif de drainage selon l'une des revendications précédentes, **caractérisé en ce que** l'unité de gouttière (11) ou une gouttière constituée de plusieurs unités de gouttière comporte une paroi frontale (14) à chaque extrémité.

11. Dispositif de drainage selon la revendication 10, **caractérisé en ce que** l'unité de gouttière (11) ou la gouttière est divisée en sections dans sa longueur, à l'aide de cloisons ou par intercalation de bacs d'admission.

12. Dispositif de drainage selon l'une des revendications précédentes, **caractérisé en ce que** le conduit de filtre (20) peut être assemblé au moyen d'un système de manchons.

13. Dispositif de drainage selon l'une des revendications précédentes, **caractérisé en ce qu'**une embase destinée à la circulation de poids lourds est attribuée à l'unité de gouttière (11).
